# EUROPEAN PATENT SPECIFICATION

(11) **EP 1 322 550 B1**
(45) Date of publication and mention of the grant of the patent: **24.01.2007**
(21) Application number: 00912849.7
(22) Date of filing: 06.04.2000
(51) Int. Cl.: C01B 3/50, B01D 71/02

(54) **METAL BEARING MEMBRANES**
METALLENTHALTENDE MEMBRANE
MEMBRANES A BASE DE METAL

(43) Date of publication of application: 02.07.2003
(73) Proprietor: Walter Juda Associates Inc., Lexington, MA 02173 (US)
(72) Inventor: JUDA, Walter, Lexington, MA 02173 (US); KREUGER, Charles, W., Cambridge, MA 02138 (US); LOMBARD, R., Todd, Pelham, MA 01002 (US)
(74) Representative: Allsop, John Rowland
(86) International application number: PCT/IB2000/000414
(87) International publication number: WO 2001/077011

(56) References cited:
- WO-A-97/40914
- GB-A- 1 061 583
- US-A- 3 533 863
- US-A- 4 319 923
- US-A- 6 103 028
- SHU J ET AL: "CATALYTIC PALLADIUM-BASED MEMBRANE REACTORS: A REVIEW" CANADIAN JOURNAL OF CHEMICAL ENGINEERING,CA,OTTAWA, ONT, vol. 69, 1 October 1991 (1991-10-01), pages 1036-1060, XP000199508
- PATENT ABSTRACTS OF JAPAN vol. 018, no. 134 (C-1176), 4 March 1994 (1994-03-04) & JP 05 317662 A (SUMITOMO METAL IND LTD;OTHERS: 02), 3 December 1993 (1993-12-03)
- MORDKOVICH V Z ET AL: "THE LARGE-SCALE PRODUCTION OF HYDROGEN FROM GAS MIXTURES: A USE FOR ULTRA-THIN PALLADIUM ALLOY MEMBRANES" INTERNATIONAL JOURNAL OF HYDROGEN ENERGY,GB,ELSEVIER SCIENCE PUBLISHERS B.V., BARKING, vol. 18, no. 7, 1 July 1993 (1993-07-01), pages 539-544, XP000322034 ISSN: 0360-3199

## Description

This invention relates to palladium-bearing hydrogen-selective metal membranes, and more particularly to methods of producing such in the form of thinned free-standing pin-hole-free sheet foil membranes.

### Background

The prior art is replete with references to palladium-bearing hydrogen selective membranes and to their use in hydrogen purifiers and reactors and the like. We have stressed in said applications the advantages of palladium alloy membranes in the form of sheet membranes, which have been made significantly thinner than the walls of the commonly used small-diameter tubular membranes. The result has been improved hydrogen permeation as well as significant palladium savings.

In particular International Patent Publication W0-A-97/40914 discloses a method for making an ultra-thin palladium containing membrane and US-A-4319923 discloses a method of etching of palladium from substrates.

As used at times in this specification and the appended claims, the term "hydrogen selective palladium-bearing metal" is intended to embrace palladium metal or a hydrogen selective palladium alloy, and the term "sheet membrane" means a sheet obtained by cold-rolling a palladium-bearing metal billet to a thickness sufficient to insure substantial freedom of pinholes.

The cost and difficulty of the before-mentioned cold-rolling of billets to substantially pinhole-free sheets, however, increases sharply as the sheet thickness decreases. In practice, substantially pinhole-free, free standing sheets of two typical hydrogen-permeable alloys consisting of palladium and copper, about 60% and about 40% (plus or minus ca.3%), respectively, by weight, (herein "Pd60/Cu40") and palladium and silver, similarly about 75% and about 25%, respectively, by weight, (herein "Pd75/Ag25") are not available commercially below a thickness of about 0.025 mm (0.001 inch.).

The method of fabrication underlying the present invention overcomes the practical limitations in thinness of such cold-rolling techniques and now enables thinner sheet membranes to be practically obtained.

The desirability of this advance is evident from the consideration that the permeability of hydrogen through a free-standing palladium-bearing membrane increases about linearly with decreasing thickness; and this, at the same time, results especially in decreasing the membrane palladium metal content. As the membranes need to be incorporated in purifier and/or reactor equipment and the like, the double advantage of a higher permeation flux with a lower palladium content is further magnified in the resulting lowered equipment cost.

### Objects of Invention

It is thus an object of this invention to provide a new and improved method to produce free-standing pinhole-free foil membranes, thinner than can customarily be produced by cold-rolling techniques.

An additional object is to provide such an improved method wherein cold-rolled bearing hydrogen-selective sheet membranes are rendered thinner by partial metal dissolution therefrom.

It is a further object of this invention to enable such method to recover the dissolved metal(s), preferably during said thinning.

It is yet another object to provide such a method adaptable to partially mask said sheet membrane, thereby thinning only selected portions thereof e.g. inner portions of its surface areas.

Still another object is to provide a new and improved thin membrane of this character resulting from fabrication by the novel method.

Other and further objects will be explained hereinafter and will be more particularly pointed out in connection with the appended claims.

### Summary

In summary, the invention embraces the method of thinning a flat, substantially pin hole-free, hydrogen-selective palladium-bearing metal sheet membrane, comprising the step of removing substantially uniformly from at least a portion of one surface thereof a sufficient amount of said metal to produce a significantly thinned, but still free-standing, substantially pin hole-free foil membrane, said removing being done by one of chemical and anodic electrochemical dissolution.

Preferred and best mode methods or fabrication steps and resulting thinned membranes made thereby will now be described in detail.

### Preferred Embodiment's of Invention

The present invention, as earlier stated, involves thinning a free standing hydrogen-selective palladium-bearing metal sheet membrane, by chemical partial metal dissolution therefrom.

In accordance with the preferred technique hereof, the membrane sheet is initially annealed in hydrogen at an elevated temperature, and then it is subjected to dissolving uniformly from at least a portion of one of its surfaces, a sufficient amount of metal(s); either chemically in an aqueous etch solution, or electrochemically (i.e. anodically) in an electrolyte, thereby producing a significantly thinned, but still free-standing, and substantially pinhole-free foil membrane.

This foil membrane, further, may require a subsequent chemical or physical reactivation step. The dissolved metal(s) can advantageously be recovered as solid metal(s) during the on-going thinning process, either by hydrogen reduction; for example, in accordance with the methods described in U.S. Patents Nos. 4,331,520, 4,422,911 and 4,478,696, incorporated herein by reference, or by simultaneous cathodic deposition, such as is commonly used in metal refining.

In addition to a palladium sheet membrane, among the many palladium alloys referenced above, the particular Pd60/Cu40 and the Pd75/Ag25 alloys, (by weight and range as above-defined) the palladium (about 93%)-ruthenium (about 7%) alloy, (herein "Pd93/Ru7") and the palladium (about 92%)-yttrium (about 8%) alloy (herein "Pd92/Y8") are preferred sheet membranes to be thinned in accordance with the present invention.

Specifically, an exemplary preferred foil membrane has been made by the method illustrated in the following examples, it being understood, however, that variations therein can be made by those skilled in the art without departing from the methodology underlying the invention.

### Example 1:

A typical annealing condition for an as-received cold-rolled sheet membrane was found to be that achieved by exposure for 15 hours at 320°C in an atmosphere of slow flowing pure hydrogen.

A 89 mm (3.5 inch) diameter disk of so-annealed 0.025 mm (0.001") thick Pd60/Cu40 sheet weighing 1.186 g was placed in the bottom of a 1000 ml beaker containing 37 ml of "neat" etching nitric acid (70%) for 45 minutes at a constant temperature of 35°C. The beaker was gently swirled every 5 minutes. After removal from the acid, the resulting partially etched foil membrane was rinsed, dried and weighed. Its final weight was 0.797 g. i.e. 67% of the initial weight, with a proportioned reduction in thickness.

This membrane was then tested in a gas permeation apparatus for hydrogen and helium permeations on 15.5cm² of the membrane area. The hydrogen permeation was only ca. 18 cc/cm²-min at permeation conditions of 300°C. 50 psig H₂ pressure on the upstream and 0 psig H₂ pressure on the downstream; under the same condition, the hydrogen permeation of an unetched control sample had been ca. 27 cc/cm²-min. The helium permeation values of both the sample and the control were undetectable (<0.1 cc/cm²-min).

For the purpose of reactivating its surfaces, the membrane was then removed from the permeation apparatus and both sides were physically abraded using wet 0.3 micron alumina powder. Upon retesting it in the permeation apparatus, the hydrogen flux had improved from 10 cc/cm²-min. to an initial value of 21.5 cc/cm²-min, and further to 35 cc/cm²-min in 3 hours, to 38 cc/cm²-min in 22 hours and eventually reaching a value of 40 cc/cm²-min after three days. The permeation to helium was, as before, undetectable.

The final observed hydrogen flux is within 1% of the expected flux which, according to accepted theory, is inversely proportional to membrane thickness, which, in this case, can be assumed to be proportional to the weight of the chemically etched sample.

When the same procedure was repeated on un-annealed, as-received cold-rolled sheet membrane, the etching was uneven and in some cases pinholes were observed, while in other cases samples were completely dissolved. Thus, annealing the metal prior to etching, was found to lead to reproducibly slower, but more uniform etching without formation of pinholes.

Hence, while no annealing allowed creating thinner foil membranes, poor yields of pin hole-free foil membranes were attained because such thinning resulted often in excessively non-uniform attack and thus erratic pin hole formation. In short, annealing markedly insured the reproducibility of producing pin hole-free thinned foil membranes.

### Example 2:

A sample of annealed Pc60/Cu40 was placed in and intermittently sealed to a frame apparatus so that only one side of the membrane was etched. By masking the edges, an exposed portion of the membrane was selected one square inch of the central portion, and the initial thickness was 0.025 mm (0.001") which enabled the membrane to be free-standing within the frame. One side of the membrane was exposed to 40 ml of "neat" nitric acid under constant agitation at 35°C for 45 minutes followed by rinsing in water and drying. The amount of material removed or thinning was determined to be approximately 30% by weight of the selected exposed portion or area. Small 1.3 mm (7/16" diameter) circles were cut from the etched portion and tested for hydrogen flux in a small permeation apparatus at 300°C and 50 psig hydrogen upstream and 0 psig hydrogen downstream (testing flux on a 0.25cm² membrane area). Again, the initial flux of an as-etched foil membrane was found to be inadequate, namely only 12.5 cc/cm²-min as compared to the expected value of approximately 40 cc/cm²-min (see above in Example 1).

This time, a second small circular foil membrane was chemically reactivated by dipping it in dilute nitric acid (10 parts H₂O to 1 part "neat" HNO₃ by volume) for 30 seconds, rinsing and drying. It was then tested for hydrogen flux which was found to reach a value actually somewhat better than 40 cc/cm²-min, within several minutes of reaching operating temperature, as opposed to the abraded sample of Example 1, which took several days to reach the expected flux.

While it is not desired to predicate the invention upon a theory, it being sufficient to describe the invention as it has been found to work, we have concluded that the first nitric acid etch had modified the membrane surface, by, for example, leaving a chemical surface contamination which caused the initial significant decrease of the permeation flux.

Whatever the reason, however, we have found that such detrimental surface modifications were physically, and, preferably, chemically removable, resulting in reactivated surfaces, thereby yielding the expected flux enhancement due to the thinning.

By this technique, the chemical etching partial dissolution of the metal of the original flat, substantially pin hole-free, hydrogen-selective palladium-bearing cold-rolled metal sheet membrane, was found to remove metal substantially uniformly from at least a portion of the surfaces thereof, and this was carried out to remove a sufficient amount of said metal to produce a significant thinning, but still leaving the membrane both free-standing and substantially pin hole-free.

In general, preferred cold-rolled membrane sheets have thicknesses between about 0.025 mm (0.001 inch) and 0.10 mm (0.004 inch) thick, and the method of the invention preferably thins or reduces the thickness by said metal dissolution at least between about 20% and 90%.

We now turn to examples of successful thinning by anodic electrochemical dissolution.

### Example 3

Three samples of annealed Pd60/Cu40 foil measuring 50.8 mm (2 in) high by 15.88 mm (0.625 in) wide by 0.025 mm (0.001 in) thick were hung vertically in a beaker through parallel slits in a Teflon sheet resting on the lip of a 25 ml beaker. The slits were cut to provide a 6.4 mm (0.25 in) gap between the foils. The foils were immersed to a depth of approximately 19 mm (0.75 in) in an electrolyte comprised of 0.7M caCl₂ in dimethylsulfoxide.

The center foil was operated electrochemically at room temperature as an anode using the outer foils as cathodes. A current of 0.036 A was passed for 30 minutes. The weight of material removed by electrochemical thinning was approximately 45% of the weight of the exposed area.

A small circle of this thinned foil was tested in the permeation apparatus under conditions described in Example 2. Initial hydrogen flux was found to be inadequate, namely 1.4 cc/cm²-min based on thinning from 0.025 (0.001 in.) to 0.013 mm (0.00055 in.) (i.e. by 55%). Any subsequent decline in flux was changed back to cc/cm²-min by reactivation with air. The permeation of helium through the membrane was undetectable.

### Example 4

Example 3 was repeated using three new samples of annealed Pd60/Cu40 and 1.5M HCl as the electrolyte. The foils were immersed to a depth of approximately 25.4 mm (1 in.). A current of 0.015A was passed for 180 minutes. The weight of the material removed by electrochemical thinning was approximately 60% of the weight of the exposed area.

A small circle of this thinned foil was tested in the permeation apparatus under conditions described in Example 2. Initial hydrogen flux was found to be inadequate, namely less than a 1 cc/cm²-min. A subsequent activation step of exposing the sample to air for 90 minutes at 300°C resulted in a hydrogen flux of 67 cc/cm²-min. This hydrogen flux corresponds to the expected value of 67 cc/cm²-min. This hydrogen flux corresponds to the expected value of 67 cc/cm²-min based on thinning from 0.001 in. to 0.0004 in. (i.e. by 40%). Any subsequent decline in flux was changed back to 67 cc/cm²-min by reactivation with air. The permeation of helium through the membrane was undetectable.

In accordance with the present invention, suitable annealing conditions, including different temperatures and (chemically inert) gas media, are readily determinable by those skilled in this art. Suitable uniform partial dissolution of metal from the sheet membranes is readily attainable by suitable well-known variations of the critical etching variables, including temperature, composition and concentration of the chemical etching solutes.

Dissolution solutes other than, or in addition to the nitric acid of Examples 1 and 2 may also be employed; the degree of stirring or lack thereof, exposure, and timing of exposure, all enabling control to the desired degree. Finally, anodic dissolution, as in Examples 3 and 4) can similarly be used with preferably low, substantially uniform anodic current densities.

As before described, moreover, during the control of aqueous chemical or anodic dissolution, the dissolved metals may be recovered as solids by one of hydrogen and cathodic reduction.

## Claims

1. The method of thinning a flat, substantially pin hole-free, hydrogen-selective palladium-bearing metal sheet membrane, comprising the steps of initially annealing said sheet membrane, removing substantially uniformly from at least a portion of one surface thereof a sufficient amount of said metal to produce a significantly thinned, but still free-standing, substantially pin hole-free foil membrane, said removing being done by one of chemical and anodic electrochemical dissolution.

2. The method of claim 1 comprising the further step of later reactivating said membrane.

3. The method of claim 2 wherein said sheet membrane is between 0.001 inch and 0.004 inch thick, and wherein its thickness is reduced by said dissolution to between 20% and 90%.

4. The method of claim 1 comprising the step of recovering the metal removed in said thinning.

5. The method of claim 1 wherein said metal is palladium alloy.

6. The method as claimed claim 5 wherein said alloy is one of Pd 60/Cu40, Pd 75/Ag 25, Pd 93/Ru7 and Pd92/Y8.

7. The method of claim 1 comprising the step of masking portions of said membrane surface to restrict said thinning to selected portions thereof.

8. The method of claim 6 wherein said alloy is Pd60/Cu40, and wherein said sheet membrane is sufficiently thick for intermetallic sealing to a frame, and comprising the step of masking the edge of said sheet, thereby thinning only center portions of said membrane.

9. The method of claim 1 wherein said metal is removed from a t least one sheet membrane surface by one of controlled chemical and anodic dissolution, and wherein the dissolved metals are recovered as solids by one of hydrogen and cathodic reduction.

10. The method of claim 9 wherein said metals are dissolved in a aqueous solution comprising nitric acid.

## Patentansprüche

1. Verfahren zum Verdünnen einer flachen, im wesentlichen pinholefreien, für Wasserstoff selektiven, Paladium aufnehmenden Metallblech-Membran, **dadurch gekennzeichnet, dass** die Blechmembran zu Beginn angelassen wird, dass von mindestens einem Teil einer Oberfläche der Membran eine ausreichende Menge des Metalls im wesentlichen gleichförmig entfernt wird, um eine erheblich verdünnte, jedoch freistehende, im wesentlichen pinhole-freie Folienmembran zu erzeugen, wobei das Entfernen durch wahlweise eine chemische und anodische elektrochemische Auflösung erfolgt.

2. Verfahren nach Anspruch 1, **dadurch gekennzeichnet, dass** die Membran zu einem späteren Zeitpunkt reaktiviert wird.

3. Verfahren nach Anspruch 2, bei dem die blattförmige Membran eine Dicke zwischen 0,001 inch und 0,004 inch hat, und dass diese Dicke aufgrund der Auflösung auf zwischen 20% und 90% reduziert wird.

4. Verfahren nach Anspruch 1, **dadurch gekennzeichnet, dass** das beim Verdünnen entfernte Material zurückgewonnen wird.

5. Verfahren nach Anspruch 1, bei dem das Metall eine Palladium-Legierung ist.

6. Verfahren nach Anspruch 5, bei dem die Legierung aus Pd 60/Cu40, Pd75/Ag25, Pd 93/Ru7 und Pd 92/Y8 besteht.

7. Verfahren nach Anspruch 1, **dadurch gekennzeichnet, dass** Teile der Membranoberfläche abgedeckt werden, um die Verdünnung auf ausgewählte Abschnitte zu beschränken.

8. Verfahren nach Anspruch 6, **dadurch gekennzeichnet, dass** die Legierung Pd60/Cu40 ist, und dass die blattförmige Membran ausreichend dick für eine intermetallische Versiegelung mit einem Rahmen ist, und dass der Rand des Bleches abgedeckt wird, wodurch nur mittlere Teile der Membran verdünnt werden.

9. Verfahren nach Anspruch 1, **dadurch gekennzeichnet, dass** das Metall von mindestens einer Blattmembran-Oberfläche durch eine gesteuerte chemische und anodische Auflösung entfernt wird, und dass die aufgelösten Metalle als Feststoffe durch eine Wasserstoff- und kathodische Reduktion zurückgewonnen werden.

10. Verfahren nach Anspruch 9, **dadurch gekennzeichnet, dass** die Metalle in einer wässrigen, Salpetersäure enthaltenden Lösung aufgelöst werden.

## Revendications

1. Procédé pour amincir une membrane plane, sensiblement exempte de piqûres, sélective pour l'hydrogène, en une feuille métallique au palladium, comprenant les étapes consistant à recuire d'abord ladite membrane en feuille, à enlever de manière sensiblement uniforme, d'au moins une portion d'une face de celle-ci, une quantité suffisante dudit métal pour produire une membrane en feuille mince, sensiblement amincie, mais toujours autoportante, sensiblement exempte de piqûres, ledit enlèvement se faisant par une dissolution chimique ou électrochimique anodique.

2. Procédé selon la revendication 1, comprenant l'étape supplémentaire consistant à réactiver ensuite ladite membrane.

3. Procédé selon la revendication 2, dans lequel ladite membrane en feuille fait entre 0,001 et 0,004 pouces d'épaisseur, et dans lequel son épaisseur est réduite jusqu'à entre 20 et 90 % par la dissolution.

4. Procédé selon la revendication 1, comprenant l'étape consistant à récupérer le métal enlevé lors de l'amincissement.

5. Procédé selon la revendication 1, dans lequel ledit métal est un alliage de palladium.

6. Procédé selon la revendication 5, dans lequel ledit alliage est l'un parmi Pd60/Cu40, Pd75/Ag25, Pd93/Ru7 et Pd92/Y8.

7. Procédé selon la revendication 1, comprenant l'étape consistant à masquer des portions de ladite face de la membrane pour limiter l'amincissement à des portions choisies de celle-ci.

8. Procédé selon la revendication 6, dans lequel ledit alliage est Pd60/Cu40, et dans lequel ladite membrane en feuille est suffisamment épaisse pour une liaison intermétallique étanche à un châssis, et comprenant l'étape consistant à masquer le bord de ladite feuille, pour n'amincir ainsi que des portions centrales de ladite membrane.

9. Procédé selon la revendication 1, dans lequel ledit métal est enlevé d'au moins une face de la membrane en feuille par l'une parmi une dissolution chimique contrôlée et une dissolution anodique, et dans lequel les métaux dissous sont récupérés sous la forme de solides par l'une parmi une réduction à l'hydrogène et une réduction cathodique.

10. Procédé selon la revendication 9, dans lequel lesdits métaux sont dissous dans une solution aqueuse comprenant de l'acide nitrique.
